# EUROPÄISCHE PATENTSCHRIFT

(11) **EP 0 994 299 B1**
(45) Veröffentlichungstag und Bekanntmachung des Hinweises auf die Patenterteilung: **23.05.2007**
(21) Anmeldenummer: 99118142.1
(22) Anmeldetag: 11.09.1999
(51) Int. Cl.: F22B 1/16, H01M 8/06

(54) **Verdampfereinheit**
Evaporator unit
Unité d'évaporation

(30) Priorität: 13.10.1998 DE 19847213
(43) Veröffentlichungstag der Anmeldung: 19.04.2000
(73) Patentinhaber: NuCellSys GmbH, 73230 Kirchheim/Teck-Nabern (DE)
(72) Erfinder: Schwab, Konrad, 89077 Ulm (DE); Tischler, Alois, 94501 Aidenbach (DE); Weisser, Marc, 73270 Owen/T. (DE)
(74) Vertreter: Finkele, Rolf

(56) Entgegenhaltungen:
- DE-A- 19 510 847
- US-A- 4 731 159

## Beschreibung

Die Erfindung betrifft eine Verdampfereinheit in Plattenbauweise gemäß dem Oberbegriff des Patentanspruchs 1.

Aus der DE 44 26 692 C1 ist eine Verdampfereinheit mit rechteckförmigen Platten zum Verdampfen und Überhitzen eines flüssigen Mediums bekannt. Die Zu- und Abströmleitungen für das zu verdampfende Medium und für ein Wärmeträgermedium, die sich jeweils entlang der Stapelrichtung durch den Plattenstapel erstrecken, sind in den Eckbereichen der Platten angeordnet.

Aus US 4,731,159 ist eine Verdampfereinheit mit kreisförmigen Platten gemäß dem Oberbegriff des Patentanspruchs 1 bekannt.

Die Aufgabe der Erfindung besteht darin, einen Verdampfer mit geringerem Druckverlust und höherer Umsatzrate zu schaffen.

Die Aufgabe wird erfindungsgemäß durch die kennzeichnenden Merkmale des Patentanspruchs 1 gelöst.

Die kreisförmige Ausbildung der Platten und die Anordnung der Zuströmleitungen für das zu verdampfende Medium und für das Wärmeträgermedium im Bereich des Mittelpunktes der Platten und der zugehörigen Abströmleitungen im Bereich des Plattenumfanges führt zu einer Durchströmung der jeweiligen Räume von innen nach außen. Dies ergibt eine Volumenzunahme in radialer Strömungsrichtung und somit eine Vergleichmäßigung der Strömungsgeschwindigkeit trotz Volumenzunahme und somit eine Verringerung des Druckverlusts.

Wird als Wärmeträgermedium ein Brenngas zur direkten katalytischen Beheizung des wärmeträgerraumes verwendet, so führt die radiale Strömungsführung des Brenngases dazu, daß sich das Brenngas zwar zum Umfang hin abreichert, daß sich gleichzeitig aber auch die Verweilzeit erhöht, so daß insgesamt höhere Umsatzraten erreicht werden können.

Die Anordnung jeweils einer Zuströmleitung für das Wärmeträgermedium genau zwischen der Zuströmleitung und der Abströmleitung für das zu verdampfende Gas führt zu einer optimalen Wärmeübertragung, da das zu verdampfende Medium nach dem Eintritt in den Verdampfungsraum die Zuströmleitung für das Wärmeträgermedium unströmen muß. Im Bereich der Zuströmleitung für das Wärmeträgermedium ist die zur Verfügung stehende Wärmemenge am größten. Gleichzeitig ist auch der Wärmebedarf im zu verdampfenden Medium direkt nach Eintritt am größten, da dort die Energie für den Phasenübergang umgesetzt wird. Somit wird genau dort am meisten Wärme bereitgestellt, wo sie auch benötigt wird.

Weitere Vorteile und Ausgestaltungen gehen aus den Unteransprüchen und der Beschreibung hervor. Die Erfindung ist nachstehend anhand einer Prinzipzeichnung näher beschrieben, wobei
- Fig. 1: den Plattenaufbau einer Verdampfereinheit und
- Fig. 2: einen vertikalen Schnitt durch die Verdampfereinheit entlang der Linie A-F zeigt.

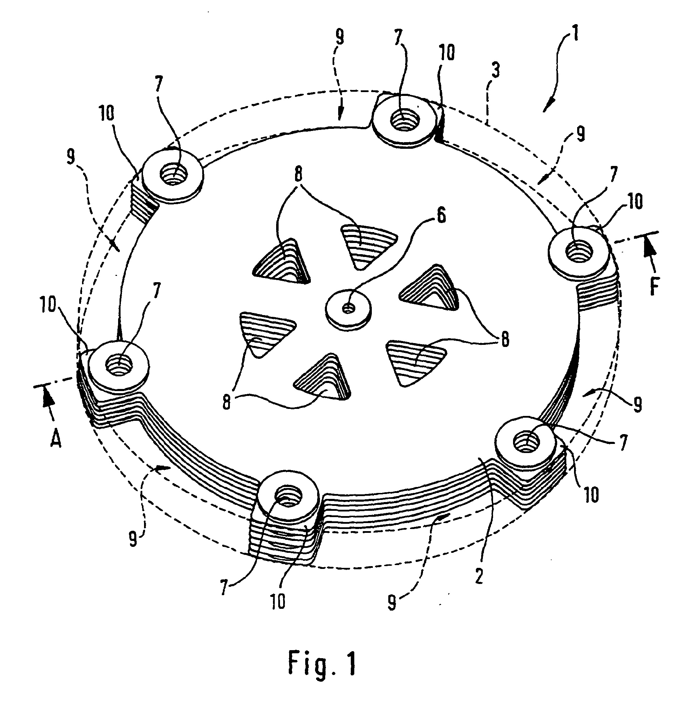

Die in der Zeichnung insgesamt mit 1 bezeichnete Verdampfereinheit besteht aus einer Vielzahl von im wesentlichen kreisförmigen Platten 2. Der Plattenstapel wird üblicherweise durch zwei nicht dargestellte Endplatten abgeschlossen. Außerdem wird der Plattenstapel nach außen durch ein Gehäuse 3 begrenzt. Das Gehäuse 3 ist jedoch aus Gründen der Übersichtlichkeit in Fig. 1 nur gestrichelt angedeutet.

Zwischen benachbarten Platten 2 werden jeweils Verdampfungsräume 4 beziehungsweise Wärmeträgerräume 5 gebildet. Vorzugsweise werden die Verdampfungs- und Wärmeträgerräume 4, 5 abwechselnd angeordnet. Zum Zu- und Abführen des zu verdampfenden Mediums und des Wärmeträgermediums sind entsprechende Zu- und Abströmleitungen 6-9 vorgesehen, die sich in Stapelrichtung durch die Verdampfereinheit 1 erstrecken. Hierzu sind in allen Platten 2 identische Ausnehmungen angeordnet.

In jeder im wesentlichen kreisförmigen Platte 2 ist im Bereich des Mittelpunktes eine Ausnehmung zur Ausbildung der Zuströmleitung 6 für das zu verdampfende Medium vorgesehen. Am Umfang der Platten sind weiterhin mehrere Vorsprünge 10, vorzugsweise kreissymmetrisch angeordnet. In jedem dieser Vorsprünge 10 ist eine Ausnehmung zur Ausbildung der Abströmleitungen 7 für das verdampfte Medium vorgesehen. Weiterhin ist zwischen der Zuström- und der Abströmleitung 6, 7 für das zu verdampfende Medium und mit radialem Abstand von der Zuströmleitung 6 jeweils eine Ausnehmung zur Ausbildung der Zuströmleitung 8 für das Wärmeträgermedium vorgesehen. Die Abströmleitungen 9 für das Wärmeträgertmedium werden schließlich durch die Räume zwischen den Platten 2 und dem Gehäuse 3 gebildet.

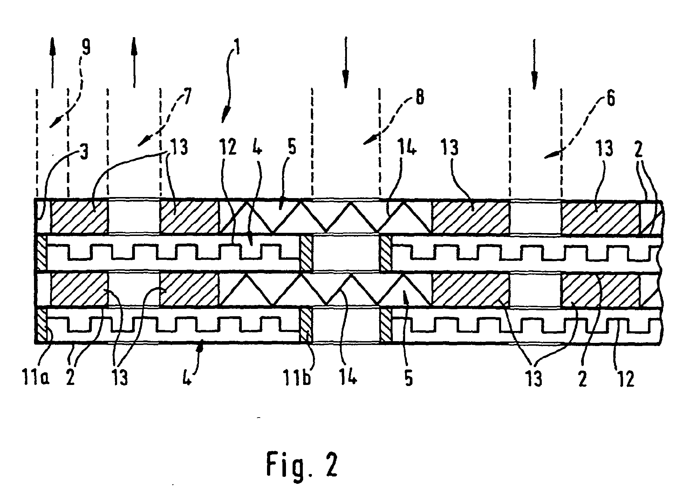

In Fig. 2 ist der prinzipielle Aufbau einer solchen Verdampfereinheit 1 gezeigt. Beim Zusammenbau der Verdampfereinheit 1 werden jeweils zwei Platten 2 miteinander verbunden, vorzugsweise durch Löten. Eine Lötverbindung 11a erstreckt sich entlang des gesamten Umfanges der Platten 2. Zusätzlich sind alle Ausnehmungen für die Zuströmleitungen 8 für das Wärmeträgermedium mit einer weiteren Lötverbindung 11b vollständig umgeben. Somit wird zwischen den beiden Platten 2 ein abgeschlossener Verdampfungsraum 4 gebildet, der nur über die Ausnehmungen für die Zu- beziehungsweise Abströmleitung 6, 7 für das zu verdampfende Medium in Strömungsverbindung steht. Im den Verdampfungsräumen 4 können Kanalstrukturen zur Verteilung des Mediums vorgesehen werden. In Fig. 2 ist eine solche Kanalstruktur 12 schematisch eingezeichnet. Sie ist aber nicht zwingend erforderlich. In der Praxis würden sich die Kanäle außerdem vorzugsweise in radialer Richtung erstrecken.

Die so zusammen gelöteten Plattenpaare 2 werden nun unter Zwischenfügen von ringförmigen Abstandshaltern 13 aufeinander gestapelt. Die Abstandshalter 13 umgeben jeweils die Ausnehmungen für die Zu- und Abströmleitungen 6, 7 für das zu verdampfende Medium und sind somit Bestandteil der Zu- und Abströmleitungen 6, 7. Neben den Abstandshaltern können zusätzlich noch Strukturen 14 zur Verteilung des Wärmeträgermediums eingefügt werden. In Fig. 2 sind solche Strukturen 14 schematisch eingezeichnet. Sie sind aber ebenfalls nicht zwingend erforderlich. Beim Stapeln bilden sich somit zwischen den Plattenpaare 2 Wärmeträgerräume 5 aus, die mit den Zubeziehungsweise Abströmleitungen 6, 7 für das zu verdampfende Medium nicht in Strömungsverbindung stehen.

Im Betrieb wird nun das zu verdampfende Medium durch die Zuströmleitung 6, die sich im wesentlichen entlang des Mittelpunktes der kreisförmigen Platten 2 erstreckt, in die Verdampfereinheit 1 eingeleitet. Das Medium strömt jeweils über die entsprechenden Ausnehmungen in die Verdampfungsräume 4. Die Abstandshalter 13 zwischen den Plattenpaaren 2 verhindern, daß das Medium auch in die Wärmeträgerräume 5 einströmen kann. Innerhalb der Verdampfungsräume 4 strömt das Medium von innen nach außen und wird dabei durch die aus den Wärmeträgerräumen 5 übertragene thermische Energie verdampft. Beim Verdampfen nimmt das Volumen des Mediums zu. Gleichzeitig nimmt aber auch das zur Verfügung stehende Strömungsvolumen in axialer Richtung zu, so daß die Strömungsgeschwindigkeit trotz Temperaturerhöhung und Verdampfung vergleichmäßigt wird, was zu eine Verringerung des Druckverlustes bewirkt.

Die zur Verdampfung und gegebenenfalls Überhitzung benötigte thermische Energie wird durch die Wärmeträgerräume 5 zur Verfügung gestellt. Die Bereitstellung der Wärme kann hierbei auf unterschiedliche Art und Weise bewerkstelligt werden. Zum einen können die Wärmeträgerräume 5 von einem heißen Wärmeträgermedium, beispielsweise einem Thermoöl, durchströmt werden. Hierzu wird das Wärmeträgermedium durch die Zuströmleitungen 8 in die Verdampfereinheit 1 eingebracht und strömt dann über die entsprechenden Ausnehmungen in die Wärmeträgerräume 5. Durch die Lötverbindungen 11b im Bereich dieser Ausnehmungen wird verhindert, daß das Wärmeträgermedium in die Verdampfungsräume 4 strömen kann. Das Wärmeträgermedium durchströmt die Wärmeträgerräume ebenfalls in radialer Richtung von innen nach außen und wird anschließend über die entsprechende Abströmleitung 9 abgeführt.

Die Wärme kann jedoch auch direkt in den Wärmeträgerräumen 5 erzeugt werden. Hierzu wird anstelle des Thermoöls ein Brenngas als Wärmeträgermedium in die Wärmeträgerräume 5 eingeleitet und dort direkt katalytisch verbrannt. Hierzu wird in den Wärmeträgerräumen 5 ein geeignetes, beispielsweise edelmetallhaltiges Katalysatormaterial in Form einer Schüttung oder einer Beschichtung vorgesehen. Das für die katalytische Verbrennung notwendige Oxidationsmittel, vorzugsweise Luftsauerstoff, kann dem Brenngas beigemischt oder aber direkt in den Wärmeträgerraum 5 zugeführt werden.

In beiden Fällen wird die maximale thermische Energie im Bereich der Zuströmleitungen 8 zur Verfügung gestellt, während sie radial nach außen abnimmt. Bei Verwendung eines Thermoöls resultiert dies durch die Abkühlung über die radiale Lauflänge. Bei der direkten katalytischen Beheizung wird das Brenngas entsprechend über die radiale Lauflänge abgereichert, so daß die Reaktionsrate und damit die bereitgestellte thermische Energie abnimmt. Gleichzeitig nimmt aber die Verweilzeit des abgereicherten Brenngases durch die Volumenzunahme ebenfalls zu, so daß insgesamt eine bessere Energieausnutzung und somit eine höhere Umsatzrate erreicht werden kann.

Weiterhin bietet diese Anordnung den Vorteil, daß genau dort die größte Energiemenge bereitgestellt wird, wo sie auch benötigt wird. Der größte Energiebedarf tritt beim Phasenübergang des zu verdampfenden Mediums, also im Eintrittsbereich auf. Dort wird aber auch die größte Energiemenge zur Verfügung gestellt, da das Thermoöl beim Eintritt in den Wärmeträgerraum 5 noch die höchste Temperatur hat beziehungsweise das zugeführte Brenngas noch hoch angereichert ist.

Durch die Anordnung der Zuströmleitungen 8 für das Wärmeträgermedium genau zwischen der Zu- und den Abströmleitungen 7 für das zu verdampfende Medium werden Bypasströme und somit Tröpfchenbildung im verdampften Medium verhindert. Das zu verdampfende Medium muß zwangsläufig auf seinem Weg von der Zu- zur Abströmleitung 6, 7 in Kontakt mit dem Wärmeträgermedium kommen, da der direkte radiale Strömungsweg durch die Zuströmleitung 8 für das Wärmeträgermedium versperrt wird. Ein weiterer Vorteil dieser Anordnung besteht schließlich noch in der thermomechanischen Entkopplung des Plattenstapels in Richtung der Plattennormalen.

Ein bevorzugtes Anwendungsbeispiel für eine solche Verdampfereinheit ist die Verdampfung von Wasser und/oder Methanol in Brennstoffzellensystemen für mobile Anwendungen, beispielsweise für den Einsatz in Kraftfahrzeugen. Hierzu werden vorzugsweise Brennstoffzellen mit protonenleitenden Elektrolytmembranen, sogenannte PEM-Brennstoffzellen, verwendet, wobei der hierfür benötigte Wasserstoff im Fahrzeug durch Wasserdampfreformierung oder partielle Oxidation erzeugt wird. Bei beiden Prozessen ist es notwendig, die Flüssigkeit vor dem Eintritt in den Reformer zu verdampfen und auf ungefähr 250° C zu überhitzen. Bei der Wasserdampfreformierung werden Wasser- und Methanoldampf typischerweise im Molverhältnis 1:1 bis 2:1 benötigt, während bei der partiellen Oxidation reiner Methanoldampf verwendet wird. Da jedoch Mischformen aus beiden Reaktionen realisiert werden können, muß generell ein Gasgemisch mit einem Molverhältnis von 0-2 Teilen Wasserdampf zu einem Teil Methanolgas hergestellt werden.

## Patentansprüche

1. Verdampfereinheit (1) in Plattenbauweise, wobei zwischen aufeinanderfolgenden Platten (2) jeweils Verdampfungsräume (4) beziehungsweise Wärmeträgerräume (5) ausgebildet sind, mit im wesentlichen senkrecht zu den Platten (2) verlaufenden Zuströmleitung und Abströmleitungen (6, 7) für ein zu verdampfendes Medium beziehungsweise für ein Wärmeträgermedium,
wobei die Platten (2) im wesentlichen kreisförmig ausgebildet sind, wobei die Zuströmleitung (6) für das zu verdampfende Medium im Bereich des Mittelpunktes der kreisförmigen Platten (2) angeordnet ist, **dadurch gekennzeichnet, daß** mehrere Zuströmleitungen (8) für das Wärmeträgermedium vorgesehen sind, die mit radialem Abstand vom Mittelpunkt der kreisförmigen Platten (2) angeordnet sind, und daß die Abströmleitungen (7, 9) für das verdampfte Medium und für das Wärmeträgermedium im Bereich des Umfanges der kreisförmigen Platten (2) angeordnet sind.

2. Verdampfereinheit nach Anspruch 1,
**dadurch gekennzeichnet,**
**daß** das Wärmeträgermedium ein Thermoöl oder ein Brenngas zur direkten katalytischen Beheizung der Wärmeträgerräume (5) ist.

3. Verdampfereinheit nach Anspruch 1,
**dadurch gekennzeichnet,**
**daß** die Zuströmleitungen (8) für das Wärmeträgermedium kreissymmetrisch zum Mittelpunkt der im wesentlichen kreisförmigen Platten (2) angeordnet sind.

4. Verdampfereinheit nach Anspruch 1,
**dadurch gekennzeichnet,**
**daß** mehrere Abströmleitungen (7) für das verdampfte Medium vorgesehen sind, die kreissymmetrisch im Bereich des Plattenumfangs angeordnet sind.

5. Verdampfereinheit nach Anspruch 1,
**dadurch gekennzeichnet,**
**daß** eine identische Zahl von Zuströmleitungen (8) für das Wärmeträgermedium und von Abströmleitungen (7) für das verdampfte Medium vorgesehen sind und daß jeweils zwischen der Zuströmleitung (6) für das zu verdampfende Medium und einer Abströmleitung (7) für das verdampfte Medium eine Zuströmleitung (8) für das Wärmeträgermedium angeordnet ist.

6. Verdampfereinheit nach Anspruch 1,
**dadurch gekennzeichnet,**
**daß** der Plattenstapel in einem zylindrischen Gehäuse (3) angeordnet ist und daß der Plattenstapel zumindest in Teilbereichen des Umfanges nicht am Gehäuse (3) anliegt und daß diese Aussparungen zwischen Plattenumfang und Gehäuse (3) als Abströmleitung (9) für das Wärmeträgermedium ausgeführt sind.

## Claims

1. Evaporator unit (1) of plate construction, evaporation chambers (4) or heat transfer chambers (5) being formed in each case between successive plates (2), with inflow and outflow lines (6, 7) for a medium to be evaporated or for a heat transfer medium extending substantially perpendicularly to the plates (2), the plates (2) being of substantially circular construction, the inflow line (6) for the medium to be evaporated being arranged in the area of the centre of the circular plates (2), **characterized in that** a plurality of inflow lines (8) are provided for the heat transfer medium, which lines are arranged at a radial distance from the centre of the circular plates (2), and **in that** the outflow lines (7, 9) for the evaporated medium and for the heat transfer medium are arranged in the area of the periphery of the circular plates (2).

2. Evaporator unit according to Claim 1, **characterized in that** the heat transfer medium is a heat transfer oil or a fuel gas for direct catalytic heating of the heat transfer chambers (5).

3. Evaporator unit according to Claim 1, **characterized in that** the inflow lines (8) for the heat transfer medium are arranged in a symmetrical circle around the centre of the substantially circular plates (2).

4. Evaporator unit according to Claim 1, **characterized in that** a plurality of outflow lines (7) for the evaporated medium are provided, which are arranged in a symmetrical circle in the area of the plate periphery.

5. Evaporator unit according to Claim 1, **characterized in that** an identical number of inflow lines (8) for the heat transfer medium and of outflow lines (7) for the evaporated medium are provided and **in that** an inflow line (8) for the heat transfer medium is arranged in each case between the inflow line (6) for the medium to be evaporated and an outflow line (7) for the evaporated medium.

6. Evaporator unit according to Claim 1, **characterized in that** the plate stack is arranged in a cylindrical housing (3) and **in that** the plate stack does not rest against the housing (3) at least over parts of the periphery and **in that** these recesses between plate periphery and housing (3) take the form of outflow lines (9) for the heat transfer medium.

## Revendications

1. Unité d'évaporation (1) à construction en plaques, des chambres d'évaporation (4) et des chambres de caloporteur (5) étant respectivement formées entre des plaques successives (2), avec des conduites (6, 7) de flux entrant et de flux sortant, s'étendant essentiellement perpendiculairement aux plaques (2), pour un fluide à évaporer ou selon le cas pour un fluide caloporteur, sachant que les plaques (2) sont réalisées essentiellement circulaires, sachant que la conduite (6) de flux entrant pour le fluide à évaporer est disposée dans la région du centre des plaques circulaires (2), **caractérisée en ce qu'**il est prévu plusieurs conduites (8) de flux entrant pour le fluide caloporteur, qui sont disposées à distance radiale du centre des plaques circulaires (2), et **en ce que** les conduites (7, 9) de flux sortant pour le fluide évaporé et pour le fluide caloporteur sont disposées dans la région de la circonférence des plaques circulaires (2).

2. Unité d'évaporation selon la revendication 1, **caractérisée en ce que** le fluide caloporteur est une huile thermique ou un gaz combustible pour le chauffage catalytique direct des chambres de caloporteur (5).

3. Unité d'évaporation selon la revendication 1, **caractérisée en ce que** les conduites (8) de flux entrant pour le fluide caloporteur sont disposées en symétrie circulaire par rapport au centre des plaques essentiellement circulaires (2).

4. Unité d'évaporation selon la revendication 1, **caractérisée en ce qu'**il est prévu plusieurs conduites (7) de flux sortant pour le fluide évaporé, qui sont disposées en symétrie circulaire dans la région de la circonférence des plaques.

5. Unité d'évaporation selon la revendication 1, **caractérisée en ce qu'**il est prévu un nombre identique de conduites (8) de flux entrant pour le fluide caloporteur et de conduites (7) de flux sortant pour le fluide évaporé, et **en ce qu'**une conduite (8) de flux entrant pour le fluide caloporteur est chaque fois disposée entre la conduite (6) de flux entrant pour le fluide à évaporer et une conduite (7) de flux sortant pour le fluide évaporé.

6. Unité d'évaporation selon la revendication 1, **caractérisée en ce que** la pile de plaques est disposée dans un boîtier cylindrique (3) et **en ce que** la pile de plaques ne s'applique pas contre le boîtier (3) au moins dans des régions partielles de la circonférence, et **en ce que** ces évidements entre la circonférence des plaques et le boîtier (3) sont conçus comme conduite (9) de flux sortant pour le fluide caloporteur.
